Europäisches Patentamt

European Patent Office

Office européen des brevets

(19)

(11) **EP 1 349 297 A1**

## (12) EUROPEAN PATENT APPLICATION

(43) Date of publication:
01.10.2003 Bulletin 2003/40

(51) Int Cl.⁷: **H04B 7/06**, H04B 7/08

(21) Application number: 03251635.3

(22) Date of filing: 18.03.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **29.03.2002 US 112098**

(71) Applicant: **LUCENT TECHNOLOGIES INC.**
**Murray Hill, New Jersey 07974-0636 (US)**

(72) Inventor: **Liu, Jung-Tao**
**Randolph, New Jersey 07981 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

## (54) A closed loop multiple antenna system

(57) A method of communication using one or more antennas. The method distributes a signal's energy over at least one transmission path in response to the air interface characteristics. The energy of the signal is adjusted or weighted by considering the possible transmission paths available. Each available propagation path has a transmissive quality based on the air interface characteristics (e.g., the matrix of propagation coefficients). Consequently, each signal, given its associated energy, is directed along the path(s) in response to its attenuation characteristics, for example, derived from the air interface characteristics.

FIG. 4A

**Description**

## CROSS-REFERENCE TO RELATED APPLICATIONS

Related subject matter is disclosed in co-pending, commonly assigned, U.S. Patent application Serial Number 10/112232, filed concurrently with the present application on March 29, 2002.

## BACKGROUND OF THE INVENTION

### I. FIELD OF THE INVENTION

The present invention relates to wireless communications, and more particularly to a closed loop, multiple antenna system.

### II. DESCRIPTION OF THE RELATED ART

The ultimate bit rate in which a communication system operates may be derived using Shannon's limit to information theory. Shannon's limit is based on a number of different parameters, including the total power radiated at the transmitter, the number of antennas at the transmitter and receiver, available bandwidth, noise power at the receiver, and the characteristics of the propagation environment.

In wireless communication systems, the demand for higher bit rates using cost effective methods is growing. One approach for increasing bit rates employs a system using multiple antennas. For example, *see* U.S. Patent Number 6,058,105, commonly assigned with the present invention. Here, a communications channel may be established between $M$ transmitter antennas of one communications unit and $N$ receiver antennas of another communications unit, where $M$ or N is greater than one.

Generally, the propagation of communication signals may be characterized by a matrix of propagation coefficients ($H$). This propagation matrix may be obtained from transmissions between one communications unit to another communications unit. Each communications unit may derive the matrix from an exchange of signals. In a first method, one unit may transmit training or pilot signals to another unit. Over the communications channel, the training signals as transmitted and the training signals as received enable the air-interface to be characterized, and thusly, the propagation matrix to be determined. Using the respective portions of the propagation matrix information, the communications units cooperatively render the communications channel into virtual sub-channels, thereby increasing the bit rate or throughput.

By ascertaining the matrix of propagation coefficients, a multiple antenna system may be used to decompose the communications channel into a number of virtual sub-channels. More particularly, each communications unit may perform a singular value decomposition of the propagation matrix. The singular value decomposition of the propagation matrix restates the propagation matrix as the product of three factors, namely $\Lambda$, $\Phi$ and $\Psi^+$, where $\Lambda$ is a diagonal matrix, and $\Phi$ and $\Psi$ are unitary matrices, with the superscript "+" denoting a conjugate transpose. Performing a singular value decomposition serves to diagonalize the propagation matrix. The number of nonzero diagonal elements in the diagonal matrix $\Lambda$ corresponds with the number of parallel independent virtual sub-channels for the particular communications channel.

Transmissions from one communications unit to another communications unit may enable the first unit to obtain at least a portion of the propagation information including the diagonal matrix $\Lambda$ and the unitary matrix $\Phi$. Here, one communications unit provides the diagonal matrix $\Lambda$ to a channel coder/modulator for encoding and modulating an incoming bit(s) or information stream. The encoded and modulated incoming bit(s) or information stream is then fed onto the independent virtual sub-channels in accordance with the values of the diagonal matrix $\Lambda$, thereby producing a virtual transmitted signal. The diagonal matrix $\Lambda$, as such, may scale the bit rate.

Thereafter, one communications unit may perform a unitary transformation on the virtual transmitted signal to produce the actual transmitted signal. This is realized by multiplying the virtual transmitted signal with the conjugate transpose of the unitary matrix $\Psi$. Subsequently, another communications unit obtains at least another portion of the propagation information, including, for example, the unitary matrix $\Phi$ and the diagonal matrix $\Lambda$. The other communications unit performs a unitary transformation on the actual received signal by multiplying the actual received signal with the unitary matrix $\Phi^+$ in order to produce a virtual received signal. The multiplications at the communications units by the unitary matrices establish a virtual channel from the actual communications channel between the virtual transmitted signal and the virtual received signal that may be treated as parallel independent virtual sub-channels. The other communications unit provides the diagonal matrix $\Lambda$ to a channel decoder/demodulator for decoding and demodulating the virtual received signal according to the matrix $\Lambda$. As a result, an information stream is produced.

Thus, multiple antenna systems provide increased capacity by effectively providing parallel independent sub-channels within the same frequency band. Multiple antenna systems also enhance performance because bits are transmitted on the virtual sub-channels relative to the values of the diagonal matrix $\Lambda$. Consequently, stronger virtual sub-channels may be used to transmit more information.

Using a multiple antenna system to decompose a communications channel into a number of virtual sub-channels may be realized using a number of schemes. One known approach is termed an open loop, transmit-diverse, multiple antenna system. Here, each receive antenna adjusts the received signals from each virtual sub-channel in accordance with the derived matrix of propagation coefficients. Open loop transmit diverse systems are relatively simple to realize. However, this relative simplicity comes at the potential expense of non-standardized implementations, where designs may vary depending on the manufacturer.

A second scheme is referred to closed loop, transmit-diverse, multiple antenna system. Here, each transmit antenna adjusts the transmitted signals from each virtual sub-channel in accordance with the derived matrix of propagation coefficients. In one mode of operation, each virtual sub-channel may be weighted by varying the phase of the corresponding signal transmitted. For example, a phase delay of 0°, 90°, 180° or 270° may be introduced into each virtual sub-channel. In another mode of operation, each virtual sub-channel is weighted by attenuating the amplitude of corresponding signal transmitted by a fixed number, such as, 0.2 or 0.8, for example.

While these known multiple antenna schemes increase capacity by using stronger virtual sub-channels to transmit more information, the demand for greater data rates still continues to grow. The efficiency of these known approaches, for example, has yet to be optimized. Consequently, a demand exists for a multiple scheme system having increased data rates than is presently available using the known transmit diverse schemes.

## SUMMARY OF THE INVENTION

The present invention provides a method of communication in which the energy of each signal is distributed using one or more propagation paths in response to the air interface characteristics. More particularly, the energy of each signal is adjusted and/or weighted by considering the propagation paths available from one or more antennas, based on the matrix of propagation coefficients (***H***). For the purposes of the present invention, the term energy refers to the power consumed, radiated, dissipated, and/or stored over a period of time, while the term signal refers to datum, data, a bit(s), a symbol(s), and/or a stream of information comprising data, bits, and/or symbols. In one example, the energy of the signal is distributed over at least one virtual sub-channel, where the virtual sub-channel(s) corresponds with the determined propagation path(s). Each available propagation path has a transmissive quality based on the air interface characteristics. Consequently, each signal, given its associated energy, is directed along the path(s) in response to its attenuation characteristics, for example, derived from the air interface characteristics.

In an embodiment of the present invention, a multiple antenna system is used to transmit a signal(s). Here, the air interface is initially characterized by determining the matrix of propagation coefficients (***H***). One or more transmission path(s) may thereafter be determined for the signal(s) from the characterization of the air interface. The signal (s) may thereafter be transmitted in accordance with the determined transmission path(s). This step of transmitting involves adjusting the energy distributed over each determined transmission path by, for example, varying the signal's power and/or modifying the signal's phase. This adjusting step may be realized by weighting each determined transmission path. In one example of the present embodiment, the weighting step is realized by calculating the right Eigen value matrix ($\Psi$) from a mathematical decomposition (e.g., Eigen value decomposition and/or Single value decomposition) of the air interface characterization, and then multiplying the signal by the right Eigen value matrix ($\Psi$).

In another embodiment of the present invention, a multiple antenna system is used to receive a communication signal(s). Once the air interface is characterized by formulating the matrix of propagation coefficients (***H***), the one or more propagation paths used may be determined for a signal(s). The signal(s) thereafter may be received in accordance with the determined propagation path(s). This step of receiving involves adjusting the signal's energy collected from each determined propagation path by, for example, varying the signal's power and/or modifying the signal's phase. This adjusting step may be realized by weighting each determined propagation path. In one example of the present embodiment, the weighting step is realized by calculating the left Eigen value matrix ($\Phi$) from a mathematical decomposition (e.g., Eigen value decomposition and/or Single value decomposition) on the air interface characterization, and then multiplying the signal by the conjugate of the left Eigen value matrix ($\Phi^+$).

## BRIEF DESCRIPTION OF THE DRAWINGS

The present invention will be better understood from reading the following description of non-limiting embodiments, with reference to the attached drawings, wherein below:

    **FIG. 1** depicts one embodiment of the present invention;
    **FIG. 2** depicts another embodiment of the present invention;

**FIG. 3** depicts a further embodiment of the present invention; and
**FIGS. 4(a) and 4(b)** depict an exemplary aspect of the present invention.

It should be emphasized that the drawings of the instant application are not to scale but are merely schematic representations, and thus are not intended to portray the specific dimensions of the invention, which may be determined by skilled artisans through examination of the disclosure herein.

## DETAILED DESCRIPTION

The present invention provides a method of communication in which the energy associated with a signal is distributed using one or more propagation paths in response to the air interface characteristics. Considering the possible propagation paths made available by one or more antennas, the energy of each signal may be adjusted and/or weighted, based on the matrix of propagation coefficients. It should be noted that the air interface characteristics reflects on the transmissive quality of each available propagation path. Consequently, each signal, given its associated energy, is directed along the path(s) in response to its attenuation characteristics, for example, derived from the air interface characteristics.

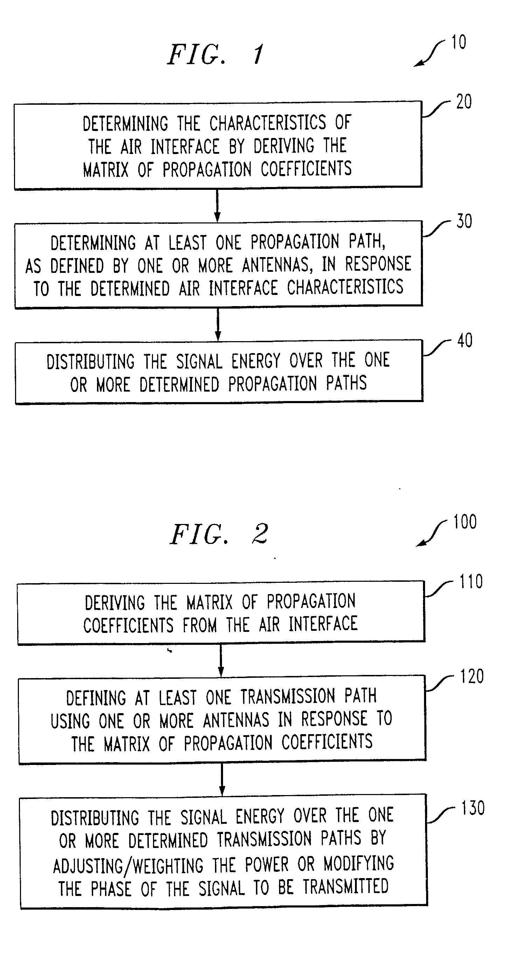

Referring to **FIG. 1**, a flow chart depicting one embodiment of the present invention is illustrated. More particularly, a method (**10**) is depicted for distributing the energy of a signal along the propagation path(s) in response to the air interface characteristics. For the purposes of the present invention, the term signal refers to datum, data, a bit (s), a symbol(s), and/or a stream of information comprising data, bits, and/or symbols.

Initially, the characteristics of the air interface between at least one transmit antenna and at least one receive antenna are determined (**20**). In performing this step, the matrix of propagation coefficients are derived by one of any number of techniques, disclosed, including, for example, the matter disclosed in co-pending, commonly assigned, U. S. Patent application Serial Number 10/112232, filed concurrently with the present application on March 29, 2002, hereby incorporated by reference.

Once the matrix of propagation coefficients (**H**) have been derived, the method subsequently determines at least one propagation path for the signal transmission and/or reception (**30**). In the present embodiment, a number of propagation paths may be defined by one or more antennas of one communications unit transmitting to one or more antennas of another communications unit. In one example, the communications units are part of a Multi-Input, Multi-Output ("MIMO") communication system. Each propagation path has a transmissive quality given the matrix of propagation coefficients - i.e., some propagation paths characterized as having less attenuation than other propagation paths. Consequently, the propagation path for the signal is determined in response to the characterization of the air interface.

Thereafter, the energy associated with the signal to be transmitted or received is distributed over the one or more determined propagation paths (**40**). For the purposes of the present invention, the term energy refers to the power consumed, radiated, dissipated, and/or stored over a period of time. In one example, the energy from each signal to be transmitted and/or received may be distributed by over at least one virtual sub-channel, as defined and detailed hereinabove, and corresponding with the determined propagation path(s). Given its associated energy, each signal is transmitted and/or received along the propagation path or paths in response to the attenuation characteristics of the paths from the air interface.

The distribution of energy of each signal may be realized by various techniques. One method involves adjusting the energy distributed over the determined propagation path(s) and/or through the virtual sub-channel(s). This step of adjusting may involve weighting the energy distributed by varying the power of the signal and/or modifying the phase of the signal along the determined path(s).

Referring to **FIG. 2,** a flow chart depicting another embodiment of the present invention is illustrated. More particularly, a method (**100**) is depicted for transmitting a signal along one or more transmission paths determined in response to the air interface characteristics. The one or more transmission paths are defined by one or more transmit antennas. In one example, the one or more transmit antennas are part of a MIMO communication system.

In this embodiment, the air interface is initially characterized (**110**). By this characterization, the matrix of propagation coefficients (**H**) may be derived. Various techniques may be employed for deriving the matrix of propagation. One such method involves one communications unit transmitting a pilot signal, and receiving the pilot signal retransmitted by a further communications unit. Another such technique for deriving the matrix of propagation may be found, for example, in co-pending, commonly assigned, U.S. Patent application Serial Number 10/112232, filed concurrently with the present application on March 29, 2002, hereby incorporated by reference.

Thereafter, one or more transmission paths for the signal are defined using at least one transmission antenna (**120**). This defining step contemplates the air interface characterized by the matrix of propagation coefficients. As each transmission path has a degree of attenuation, the air interface, and thusly, the matrix of propagation coefficients are considered. Consequently, the transmission path(s) to be used by the transmit antenna(s) are determined by this defining step.

Once the transmission path(s) to be used is determined, the energy of the signal to be transmitted is distributed (**130**). More particularly, the energy of the signal is distributed over the determined transmission path(s). Given its associated energy, each signal is transmitted via this distribution step over the determined transmission path(s) in response to the attenuation characteristics of the paths from the air interface. In one example, the energy from each signal to be transmitted may be distributed over at least one virtual sub-channel, where each virtual sub-channel corresponds with the determined transmission path(s).

The distribution of energy from the signal(s) may be realized by various techniques. One method involves adjusting the energy distributed over the determined transmission path(s) and/or through the virtual sub-channel(s) by varying the signal's power and/or modifying the signal's phase. This step of adjusting may be realized by weighting each determined transmission path. In one example of the present embodiment, the weighting step is realized by first calculating a right Eigen value matrix ($\Psi$) from a mathematical decomposition of the air interface, and then multiplying the signal by the right Eigen value matrix ($\Psi$). It should be noted here that the mathematical decomposition of the air interface might be an Eigen value decomposition and/or a Single value decomposition.

In a further embodiment, the signal to be transmitted by the instant method (**100**) may be characterized as a stream(s) of information. Each element of the stream of information may include, for example, a bit, datum and/or symbol. In response to determining the transmission path(s), the energy of the stream, over a time interval, may be distributed through one or more virtual sub-channels corresponding with the determined the transmission path(s). As a result, the power of at least one element of the stream may be adjusted and/or the phase of each element may be modified. At least one element of the stream thereafter may be transmitted corresponding with the determined transmission path(s) by weighting each virtual sub-channel using the right Eigen value matrix ($\Psi$).

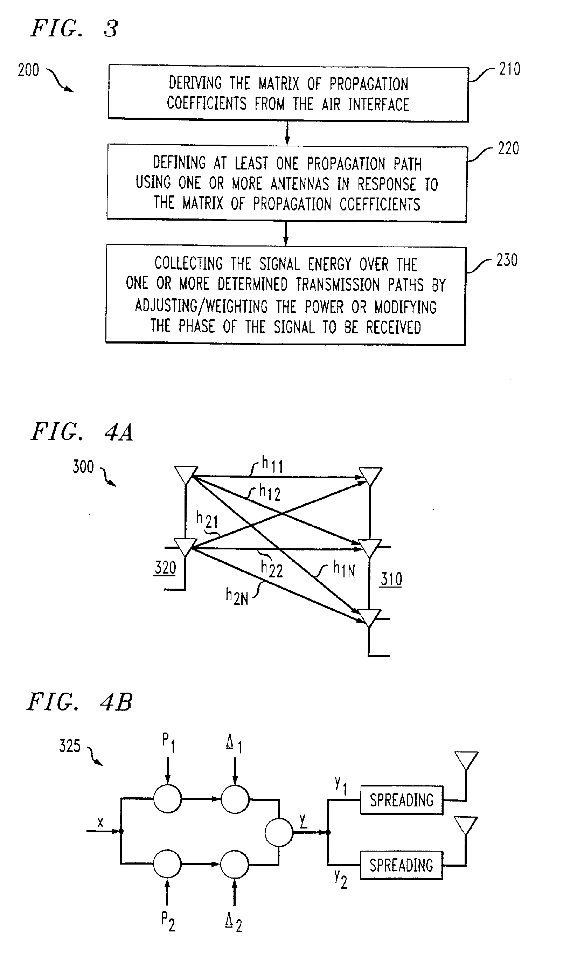

Referring to **FIG. 3,** a flow chart depicting yet another embodiment of the present invention is illustrated. More particularly, a method (**200**) is depicted for receiving a signal along one or more propagation paths determined in response to the air interface characteristics. The one or more propagation paths are detected or defined by one or more receive antennas. In one example, the one or more receive antennas are part of a MIMO communication system.

In this embodiment, the air interface is initially characterized (**210**). By this characterization, the matrix of propagation coefficients (**H**) may be derived. Various techniques may be employed for deriving the matrix of propagation. One such method involves one communications unit transmitting a pilot signal, and receiving the pilot signal retransmitted by a further communications unit. Another such technique for deriving the matrix of propagation may be found, for example, in co-pending, commonly assigned, U.S. Patent application Serial Number 10/112232, filed concurrently with the present application on March 29, 2002, hereby incorporated by reference.

Thereafter, one or more propagation paths are defined for a signal(s) using at least one receive antenna (**220**). This defining step takes the air interface characteristics into consideration. As each propagation path has a degree of attenuation, the air interface, and thusly, the matrix of propagation coefficients are considered. Consequently, the propagation path(s) to be used created by the receive antenna(s) are determined by this defining step.

Once the propagation path(s) is determined, the energy of a signal to be received is collected (**230**). More particularly, the energy of the signal is collected over the determined propagation path(s). Given its associated energy, each signal is received via this collection step over the determined propagation path(s) in response to the attenuation characteristics of the paths from the air interface. In one example, the energy from each signal to be received may be collected over at least one virtual sub-channel corresponding with the determined propagation path(s).

The collection of energy from the signal(s) may be realized by various techniques. One method involves adjusting the energy collected over the determined propagation path(s) and/or through the virtual sub-channel(s) by varying the signal's power and/or modifying the signal's phase. This step of adjusting may be realized by weighting each determined propagation path. In one example of the present embodiment, the weighting step is realized by first calculating a left Eigen value matrix ($\Phi$) from a mathematical decomposition of the air interface, and then multiplying the signal to be received by the conjugate of the left Eigen value matrix ($\Phi^+$).

In a further embodiment, the signal to be received by the instant method (**200**) may be characterized as a stream(s) of information. In response to determining the propagation path, the energy of the stream, over a time interval, may be re-distributed through one or more virtual sub-channels corresponding with the determined propagation paths. As a result, the power of at least one element (e.g., bit, data or symbol) of the stream may be re-adjusted and/or the phase of at least one element may be re-modified. At least one element of the stream thereafter may be received from its determined propagation path(s). It should be noted here that the mathematical decomposition of the air interface might be an Eigen value decomposition and/or a Single value decomposition.

In an example of the present invention, a MIMO communication system may be employed in conjunction with the methods detailed hereinabove. Referring to **FIG. 4(a)**, an **NxM** MIMO communication system **300** is shown having a receiver with an antenna group **310** and a transmitter with an antenna group **320**. Here, the number of antenna elements, **M**, in the antenna group **310** are equal to or greater than the number of antenna elements, **N**, in the antenna group **320.**

As detailed hereinabove, the air interface between antenna groups **310** and **320** effects the transmission and reception of information. Virtual sub-channels characterizing the channel for transporting this information may be perceived as having flat fading characteristics at the receiver antenna group **310**. The air interface at receiver antenna group **310** may be characterized using the following matrix expression:

$$H = \begin{bmatrix} h_{11} & h_{21} \\ h_{12} & h_{22} \\ \vdots & \vdots \\ h_{1N} & h_{2N} \end{bmatrix}$$

where **H** is the matrix of propagation coefficients and each $h_{ij}$ term of matrix **H** is an identically independently distributed complex Gaussian random variable. Each identically independently distributed complex Gaussian random variable may correspond with a path of propagation and transmission, particularly at low propagation and/or transmission speeds.

At the transmitter antenna group **320** of MIMO communication system **300,** a given signal characterized by a symbol, **x**, is premultiplied. In accordance with the embodiments of the present invention, this pre-multiplication step effectuates in part the distribution of the energy of signal for transmission. This pre-multiplication step is may be mathematically realized by multiplying the symbol, **x**, by a given matrix, $\Lambda$, and a given vector, **P**, as shown in the following mathematical expression:

$$y = H * \Psi * \underline{P} * x$$

where **y** is the noiseless base-band received signal vector, **H** is the matrix of propagation coefficients, $\Psi$ is a Eigen vector matrix, and $P$ is a vector. Eigen vector matrix, $\Psi$, may be derived by decomposing matrix **H⁺H**, with the superscript "**+**" denoting a conjugate transpose. Vector **P** comprises a number of scalars corresponding with the desired distribution of energies as a function of the determined transmission paths. In the illustrated example, vector **P** may be expressed and computed using the following equations:

$$\text{if the vector } \underline{P} = [P_1, P_2]^t,$$

and

$$\text{if } (P_{total} - N_1 + N_2 \geq 0) \text{ and } (P_{total} + N_1 - N_2 \geq 0),$$

$$P_1 = \frac{1}{2}[P_{total} - N_1 + N_2],$$

$$P_2 = \frac{1}{2}[P_{total} + N_1 - N_2],$$

$$\text{if } (P_{total} - N_1 + N_2 \geq 0)$$

$$P_1 = \frac{1}{2}[P_{total} - N_1 + N_2],$$

$$P_2 = 0,$$

$$if \ (P_{total} + N_1 - N_2 \geq 0)$$

$$P_1 = 0,$$

$$P_2 = \frac{1}{2}[P_{total} + N_1 - N_2],$$

*else*

$$P_1 = 0,$$

$$P_2 = 0$$

where *t* denotes the vector transpose operator, $P_{TOTAL}$ is the total power available at transmitter **325,** and $N_i$ is the noise variance for the *i*-th eigenvector.

Referring to **FIG. 4(b)**, one transmitter implementation **325** is shown. Transmitter architecture **325** is depicted for use in a CDMA system. However, it will be apparent to skilled artisans upon reviewing the instant disclosure that transmitter architecture **325** may be used for data, voice or data and voice in any communication system (e.g., CDMA or TDMA) employing two antenna elements in the transmitter.

Transmitter **325** has no prior information on the channel transporting the information, characterized by the virtual sub-channels, as perceived at the receiver (not shown). Moreover, transmitter **325** has no information regarding the noise variance, $N_i$s. Consequently, feedback information from the receiver may be useful to reconstruct the channel, and the noise variances at the transmitter **325**. At the receiver, the received signal may be expressed by the following equation:

$$\underline{r} = H \ast \Psi \ast P \ast x + \underline{n}$$

where *r* is the base-band received signal vector, *H* is the matrix of propagation coefficients, $\Psi$ is the aforementioned Eigen vector matrix, and $\underline{P}$ is the aforementioned vector, *x* is a symbol generated by coding, puncturing/repeating, and/ or modulating the information bits, and $\underline{n}$ is a vector characterizing the noise.

After the base-band received signal vector, $\underline{r}$, is obtained, and the propagation information of the channel (e. g., the air interface) is characterized, the receiver may perform a decomposition step to obtain the left and right Eigen matrices, $\Phi$ and $\Psi$. This decomposition step may be realized by single value decomposition ("SVD"). It should be noted, however, that alternatives, such as Eigen value decomposition may also be employed to obtain the left and right Eigen matrices, $\Phi$ and $\Psi$. Furthermore, right Eigen matrix, $\Psi$, may be expressed by the following equation:

$$\Psi = \begin{bmatrix} \dfrac{|b|}{\sqrt{|b|^2 + (\lambda_1 - a)^2}} & \dfrac{(\lambda_2 - d)}{\sqrt{|b|^2 + (\lambda_2 - d)^2}} \dfrac{b}{|b|} \\ \dfrac{(\lambda_1 - a)}{\sqrt{|b|^2 + (\lambda_1 - a)^2}} \dfrac{b^*}{|b|} & \dfrac{|b|}{\sqrt{|b|^2 + (\lambda_2 - d)^2}} \end{bmatrix}$$

where *a, b, d,* are the elements of the matrix *H⁺H,* as defined by the following equation:

$$H^+H = \begin{bmatrix} a & b \\ b^* & d \end{bmatrix}$$

and $\lambda_i$s are the $i$-th eigenvalue of the matrix $H^+H$, given by the following equation:

$$\lambda = \frac{1}{2}\left[(a+d) \pm \sqrt{(a-d)^2 + 4|b|^2}\right]$$

and eigenvalues, $\lambda_1$ and $\lambda_2$, for example, may be employed in following equation:

$$\Lambda = \begin{bmatrix} \sqrt{\lambda_1} & 0 \\ 0 & \sqrt{\lambda_2} \end{bmatrix}$$

where $\Lambda$ is a diagonal matrix. It should be noted that diagonal matrix, $\Lambda$, is equivalent to the singular value matrix from the singular value decomposition of the matrix of propagation coefficients, $H$. As a result, the left Eigen matrix, $\Phi$, may be computed using the following expression:

$$\Phi = H * \Psi^+ * \Lambda^{-1}$$

where $\Lambda^{-1}$ is the inverse of the singular value matrix, $\Lambda$.

By the above mathematical expressions, the receiver may then pre-multiply the received signal $\underline{r}$ by the left Eigen matrix, $\Phi^+$, to obtain another vector $\underline{\hat{r}}$, the de-correlated base-band received signal vector. The de-correlated base-band received signal vector, $\underline{\hat{r}}$, may be expressed using the following mathematical equation:

$$\underline{\hat{r}} = \Phi^+_* \underline{r}$$

$$\underline{\hat{r}} = \Phi^+_* (H_* \Psi_* P_* x + \underline{n}), \text{ or}$$

$$\underline{\hat{r}} = \Lambda_* \underline{P}_* x + \underline{\tilde{n}}$$

where $\underline{\tilde{n}}$ is the equivalent noise vector that is a linear combination of the original noise vector, $\underline{n}$. It should be noted that the de-correlated base-band received signal vector, $\underline{\hat{r}}$, is the base-band received signal of the independent virtual sub-channels. The de-correlated base-band received signal vector, $\underline{\hat{r}}$, may then be processed using a maximum likelihood ("ML") detector and combined using a maximum ratio-combining ("MRC") step. The mathematical formula for the above operation may be re-expressed as follows:

$$\underline{\hat{x}} = \max_x |\underline{\hat{r}} - S\underline{P}x|^2$$

where $\hat{x}$ is the estimated transmitted symbol.

An illustrative embodiment of a multiple antenna communication system, according to the principles of the present invention, is described herein. The illustrative embodiment depicts how on such a multiple antenna communication might be implemented to provide high bit rate and enhanced performance. The multiple antenna system accomplishes this by using multiple antenna arrays at the transmitter and/or receiver and taking advantage of the propagation characteristics obtained for the multiple-antenna channel between the antenna(s) of one communications unit and the antenna(s) of another communications unit. By ascertaining certain propagation characteristics of the actual communications channel (multiple-antenna channel) at one communication unit and another communications unit, the multiple antenna system may achieve higher bit rates by having the communications units cooperatively decompose the actual communications channel into multiple virtual sub-channels. For transmissions from the one communication unit to the other communications unit, the communication units obtain at least respective portions of the propagation information characterizing the transmissions from one communication unit to the other communication unit. The communication units use at least their respective portions of the propagation information to decompose the actual communications channel into multiple virtual sub-channels over which communication signals are transmitted. As such, the multiple antenna communication system achieves high bit rates in a relatively simple manner without increasing total power or bandwidth by using the virtual sub-channels within the same frequency band. Additionally, the multiple antenna system provides enhanced performance by transmitting more bits over the stronger sub-channels as determined by the propagation information.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller, a mobile switching center and/or a radar system. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

**Claims**

1. A method of communication comprising:

   distributing energy corresponding with at least one signal using at least one propagation path in response to determining air interface characteristics, the at least one propagation path defined by one or more antennas.

2. A method of communication comprising:

   transmitting at least one signal over at least one transmission path, the at least one transmission path determined in response to **characterizing** an air interface, the at least one transmission path defined by one or more antennas.

3. A method of communication comprising:

   receiving at least one signal over at least one propagation path, the at least one propagation path determined in response to **characterizing** an air interface, the at least one propagation path defined by one or more antennas.

4. The method of Claim 2, wherein the step of transmitting a signal over at least one transmission path comprises:

   distributing the signal's energy over the at least one transmission path.

5. The method of Claims 1, 2, 3, 4, wherein the step of distributing comprises:

adjusting the energy distributed in response to a matrix of propagation coefficients corresponding with the interface.

6. The method of Claim 5, wherein the step of adjusting comprises:

   varying the signal's power and/or modifying the signal's phase.

7. The method of Claims 5 or 6, wherein the step of adjusting comprises:

   calculating a right Eigen value matrix upon performing an Eigen value decomposition and/or a Singular value decomposition of the air interface characterization.

8. The method of Claims 2 or 3, wherein the signal's energy is distributed over at least one virtual sub-channel corresponding with the at least one path, and the step of distributing the signal's energy comprises:

   adjusting the energy distributed over the at least one virtual sub-channel in response to the air interface characteristics by multiplying the signal by the right Eigen value matrix.

9. The method of Claim 1, wherein the energy from the signal is distributed over at least one virtual sub-channel, the at least one virtual sub-channel corresponding with the at least one propagation path.

10. The method of Claim 3, wherein the step of receiving a signal over at least one propagation path comprises:

    collecting the signal's energy from the at least one propagation path.

*FIG. 1* $\quad$ 10

DETERMINING THE CHARACTERISTICS OF
THE AIR INTERFACE BY DERIVING THE
MATRIX OF PROPAGATION COEFFICIENTS $\quad$ 20

DETERMINING AT LEAST ONE PROPAGATION PATH,
AS DEFINED BY ONE OR MORE ANTENNAS, IN RESPONSE
TO THE DETERMINED AIR INTERFACE CHARACTERISTICS $\quad$ 30

DISTRIBUTING THE SIGNAL ENERGY OVER THE ONE
OR MORE DETERMINED PROPAGATION PATHS $\quad$ 40

*FIG. 2* $\quad$ 100

DERIVING THE MATRIX OF PROPAGATION
COEFFICIENTS FROM THE AIR INTERFACE $\quad$ 110

DEFINING AT LEAST ONE TRANSMISSION PATH
USING ONE OR MORE ANTENNAS IN RESPONSE TO
THE MATRIX OF PROPAGATION COEFFICIENTS $\quad$ 120

DISTRIBUTING THE SIGNAL ENERGY OVER THE ONE
OR MORE DETERMINED TRANSMISSION PATHS BY
ADJUSTING/WEIGHTING THE POWER OR MODIFYING
THE PHASE OF THE SIGNAL TO BE TRANSMITTED $\quad$ 130

## FIG. 3

```
200 ⤸
        ┌─────────────────────────────────────────┐
        │   DERIVING THE MATRIX OF PROPAGATION    │── 210
        │   COEFFICIENTS FROM THE AIR INTERFACE   │
        └─────────────────────────────────────────┘
                           │
                           ▼
        ┌─────────────────────────────────────────┐
        │   DEFINING AT LEAST ONE PROPAGATION PATH │── 220
        │   USING ONE OR MORE ANTENNAS IN RESPONSE TO │
        │   THE MATRIX OF PROPAGATION COEFFICIENTS │
        └─────────────────────────────────────────┘
                           │
                           ▼
        ┌─────────────────────────────────────────┐
        │   COLLECTING THE SIGNAL ENERGY OVER THE  │── 230
        │   ONE OR MORE DETERMINED TRANSMISSION PATHS BY │
        │   ADJUSTING/WEIGHTING THE POWER OR MODIFYING │
        │   THE PHASE OF THE SIGNAL TO BE RECEIVED │
        └─────────────────────────────────────────┘
```

## FIG. 4A

$$300$$

$h_{11}$, $h_{12}$, $h_{21}$, $h_{22}$, $h_{1N}$, $h_{2N}$

320    310

## FIG. 4B

$$325$$

$P_1$    $\underline{\Delta}_1$

$x$ → $y_1$ → SPREADING

$\underline{y}$

$P_2$    $\underline{\Delta}_2$

$y_2$ → SPREADING

**European Patent Office**

## EUROPEAN SEARCH REPORT

Application Number

EP 03 25 1635

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/034263 A1 (DABAK ANAND G ET AL) 21 March 2002 (2002-03-21) * page 1, right-hand column, paragraph 13 - page 4, right-hand column, paragraph 56; claim 1; figures 1-6 * | 1-10 | H04B7/06 H04B7/08 |
| X,D | EP 0 905 920 A (LUCENT TECHNOLOGIES INC) 31 March 1999 (1999-03-31) * page 2, line 25 - page 3, line 12; figures 1-3 * * page 3, line 49 - page 6, line 53 * | 1-10 | |
| X | LO T K Y: "MAXIMUM RADIO TRANSMISSION" IEEE TRANSACTIONS ON COMMUNICATIONS, IEEE INC. NEW YORK, US, vol. 47, no. 10, October 1999 (1999-10), pages 1458-1461, XP000868645 ISSN: 0090-6778 * the whole document * | 1-6 | |
| X | EP 1 133 073 A (MATSUSHITA ELECTRIC IND CO LTD) 12 September 2001 (2001-09-12) * column 2, line 46 - column 3, line 1 * | 1,2,4 | TECHNICAL FIELDS SEARCHED (Int.Cl.7) H04B |
| X,P | EP 1 289 169 A (SAMSUNG ELECTRONICS CO LTD) 5 March 2003 (2003-03-05) * paragraph [0051] - paragraph [0053]; claim 5; figure 10 * | 1-7 | |

The present search report has been drawn up for all claims

| Place of search | Date of completion of the search | Examiner |
|---|---|---|
| MUNICH | 13 June 2003 | Burghardt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 25 1635

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2003

| Patent document cited in search report | | Publication date | Patent family member(s) | | Publication date |
|---|---|---|---|---|---|
| US 2002034263 | A1 | 21-03-2002 | NONE | | |
| EP 0905920 | A | 31-03-1999 | US CA DE EP JP | 6058105 A 2247618 A1 69809676 D1 0905920 A2 11168453 A | 02-05-2000 26-03-1999 09-01-2003 31-03-1999 22-06-1999 |
| EP 1133073 | A | 12-09-2001 | JP AU EP CN WO | 2001094487 A 7310900 A 1133073 A1 1321370 T 0122619 A1 | 06-04-2001 24-04-2001 12-09-2001 07-11-2001 29-03-2001 |
| EP 1289169 | A | 05-03-2003 | CN EP US | 1416283 A 1289169 A1 2003043946 A1 | 07-05-2003 05-03-2003 06-03-2003 |

EPO FORM P0459